# EUROPEAN PATENT SPECIFICATION

(11) **EP 1 553 118 B1**
(45) Date of publication and mention of the grant of the patent: **08.11.2006**
(21) Application number: 05000046.2
(22) Date of filing: 04.01.2005
(51) Int. Cl.: C08G 18/10, C08G 18/48, C08G 18/75

(54) **Low residual monomer IPDI-PPG Prepolymer**
IPDI-PPG Prepolymer mit niedrigem Restmonomergehalt
Prepolymere IPDI-PPG contenant un faible teneur en monomeres

(30) Priority: 08.01.2004 US 753635
(43) Date of publication of application: 13.07.2005
(73) Proprietor: AIR PRODUCTS AND CHEMICALS, INC., Allentown, PA 18195-1501 (US)
(72) Inventor: Conner, Mark David, New Tripoli PA 18066 (US); Koch, John J., Coplay PA 18037-1719 (US); Goddard, Richard Joseph, Fogelsville PA 18051 (US)
(74) Representative: Schwabe - Sandmair - Marx

(56) References cited:
- DE-A1- 4 136 490
- US-A1- 2003 120 019

## Description

The present invention pertains to low viscosity prepolymers containing low amounts of residual free monomer, and free of aromatic isocyanates.

It is known in the art to prepare polyurethanes by reacting a prepolymer with a chain-extending agent such as water (moisture), a diamine or a short chain diol. Prepolymers are typically provided by the reaction of an aliphatic or aromatic polyisocyanate with a long chain polyol. Properties of the resulting polyurethane are controlled by proper selection of isocyanate, long chain polyol and chain extending agent.

It is also known in the art to react isophorone diisocyanate (IPDI) with polyol to form isocyanate prepolymers. These prepolymers are formed either at low NCO/OH ratio (less than 2-3 to 1, i.e., <2-3/1), which can result in a relatively low amount of free isocyanate monomer but a complex mixture of products, or at high NCO/OH ratio, which can result in a prepolymer with low oligomer content, but high (>1%) IPDI monomer content. Most of the literature that describes the preparation and use of these conventional IPDI prepolymers -- that is prepolymers prepared at NCO/OH ratio of about 2 containing unreacted diisocyanates -- do no analysis of any kind to determine the extent of reaction of the prepolymer portion of their work. Two examples of scientific literature where the prepolymers were examined are Barbeau et al. and Lomolder et al. (below).

Barbeau et al., J. Polymer Sci:part B:Polymer Physics 38, 2750, 2000, describes the preparation of prepolymers based on a variety of diisocyanates, including IPDI. In this work, it is explicitly shown that the non-catalyzed reaction between IPDI and polypropylene glycol (PPG) is far too slow for practical purposes to achieve fully reacted IPDI/PPG prepolymers. The reaction of IPDI and PPG at a NCO/OH ratio of 2:1 was only 33% complete after 30 hours at 80°C.

Lomolder et al., J. Coatings Technology, 69, 868, 1997, discloses a study of the reaction of IPDI with both PPG and a model for this secondary polyol, sec-butanol, comparing the results with PTMEG polytetramethylene glycol) and a model for the primary polyol, 1-butanol. This reference describes decreasing selectivity and higher byproduct formation at elevated temperatures (at least 100°C). The reference notes a lower viscosity and higher IPDI monomer content at 80°C when uncatalyzed, which was attributed to thermal degradation of the PPG backbone, presumably the hindered linkages between the PPG polyol end group and the IPDI isocyanate groups. The higher viscosity and lower IPDI monomer content for the IPDI/PPG reaction catalyzed at 100°C was explained by side reactions of IPDI isocyanates including allophonate formation. Presumably, the IPDI side reactions, which form the byproducts contributing to higher viscosity, at 100°C overwhelm the thermal degradation of the PPG-IPDI, which would otherwise result in lower viscosity product mixtures.

The scientific literature for IPDI-PPG reactions suggests that prepolymers can indeed be formed, but require addition of catalyst in order to facilitate the reaction. Further, the inherent instability of the IPDI-PPG bond suggests that temperatures higher than about 80°C will result in degradation of the thus formed prepolymer. Thus, temperatures of sufficient intensity to remove unreacted IPDI (e.g., via distillation) would be expected to result in significant decomposition of the product.

Based on the reported instability of the IPDI-PPG bond, it follows naturally that the presence of a catalyst would be expected to accelerate the degradation of the IPDI-PPG prepolymer and in addition result in significant byproduct formation at the same temperature.

IPDI-PPG prepolymers are described in the background art of a number of patents, including U.S. Patent No. 5,449,704 to Thompson et al. The background of this patent discusses the preparation of prepolymers using any of a number of isocyanate components together with one (or combinations of more than one) hydroxyl or amine-containing component. For the purpose of the '704 patent, one may define a prepolymer as simply the reaction product of a polyisocyanate and a polyhydroxyl or polyamine in a stoichiometric ratio exceeding 1/1. In the '704 patent, the primary focus of the work is to make a photopolymerizable material. The photopolymerizable material is based on polyurethane prepolymers, of which the aforementioned IPDI-PPG prepolymer is a preferred material. Example 1 describes the synthesis of this prepolymer where IPDI is present in an excess of about 4.5/1 and reacted with a polypropylene glycol of MW 2000. In this case, the molar NCO/OH ratio is the same as the relative molar ratio, since both reactive components have a functionality of about 2.0. The PPG is added over 30 minutes and reaction is continued for a further 3 hours at 50-55°C in the presence of a stannous octoate catalyst at 0.32 weight% based on the IPDI. The prepolymer is not isolated or characterized, but reacted directly to form the photopolymerizable materials.

U.S. Patent No. 5,290,853 to Regan et al. describes one-part moisture-curable polyurethane adhesives prepared by reacting polyols with organic polyisocyanates. The organic polyisocyanates are described as having a functionality greater than 2 and are preferred to have a functionality from about 2.2 to about 2.5 for cross-linking purposes in the end product. The isocyanate equivalent to polyol equivalent ratio is described as between 3:1 and 15:1; however, the excess polyisocyanate, which does not react with the polyol is not removed from the prepolymer. Various forms of MDI are the preferred isocyanates. There is no suggestion that IPDI would be a preferred isocyanate in a moisture-cure polyurethane adhesive.

IPDI-based prepolymers containing greater than 85-90% of the 2:1 adduct of isocyanate to polyol (NCO/OH) with less than 1% residual IPDI are disclosed in U.S. Patent No. 5,670,599 to Bassner as part of a coating composition. The '599 patent discloses compositions with polyol functionality greater than 2.0 and as a part of a composition which includes an additional 10-90% of an isocyanate crosslinker. There are no examples of any type of IPDI-PPG prepolymer prepared in this patent.

U.S. Patent No. 6,309,313 to Uniroyal Chemical Company describes polyurethane elastomer golf ball covers prepared from poly(propylene oxide), poly(ethylene oxide) and mixtures of these polyols with diisocyanates. IPDI is included in generic lists of useful diisocyanates but there are no descriptions or examples of the use of IPDI in preparing a poly(propylene oxide) prepolymer. There is one example (Example 1) of IPDI itself post-added to a TDI prepolymer.

U.S. Patent No. 5,115,071 to Quay et al. discloses polyurethane coatings formed from prepolymers made by reacting polyisocyanates with long chain polyols having an average functionality of greater than 2. The resulting prepolymers have equivalent weights greater than about 250 grams per equivalent. An excess of polyisocyanate is reacted with the polyol component at an equivalent ratio of greater than 4:1 equivalents isocyanate per equivalent of polyol. Excess polyisocyanate is then removed from the prepolymer to a concentration preferably less than 1% by weight. The prepolymer essentially comprises two equivalents polyisocyanate per equivalent of polyol due to the high ratio of isocyanate to polyol in the original reaction mixture. IPDI is identified and claimed as a suitable diisocyanate. Poly(propylene oxide) polyols are also disclosed and claimed. However, there are no descriptions or examples of the use of IPDI in preparing a poly(propylene oxide) prepolymer.

Accordingly, it is desired to provide a low viscosity prepolymer containing low amounts of residual free monomer, and free of aromatic isocyanates. It is further desired to incorporate poly(propylene glycol) into such a prepolymer to lower costs and enhance performance attributes, such as good moisture cure characteristics.

All references cited herein are incorporated herein by reference in their entireties.

Accordingly, the invention provides a prepolymer composition comprising at least 70 wt.% of a 2:1 adduct of isophorone diisocyanate (IPDI) and polypropylene glycol (PPG), and comprising less than 1 wt.% residual IPDI.

The invention further provides a process comprising reacting IPDI with PPG at an NCO:OH ratio of 4:1 to 20:1 to provide a product mixture comprising the 2:1 adduct, wherein residual IPDI is distilled from the product mixture such that a concentration of residual IPDI in the product mixture is less than 1%.

The invention is based in part on the unexpected discovery that a 2:1 adduct of IPDI-PPG possesses thermal stability sufficient to permit distillation of residual IPDI from the product mixture containing the adduct. Accordingly, the invention can provide a prepolymer composition comprising at least 70 wt.% of a 2:1 adduct of IPDI and PPG, and comprising a low amount of residual IPDI.

The residual IPDI is preferably distilled from the product mixture to a concentration less than 1 wt.%, more preferably less than 0.5 wt.%, even more preferably 0.1 wt.% or less residual IPDI. Distillation is typically accomplished at a temperature of at least 100°C. Distillation is preferably conducted under vacuum. For example, with a vacuum of about 1.0 mm Hg, it is preferred to heat the product mixture to a temperature of at least 150°C, more preferably at least 180°C to distill residual IPDI from the product mixture.

The unexpected stability of the IPDI-PPG bond is especially surprising for embodiments of the invention comprising the use of a catalyst to form the IPDI-PPG prepolymer. These embodiments provide the inventive prepolymer despite the purported destabilizing effects of distillation and catalysis. Suitable catalysts for use in the invention include, but are not limited to, stannous octoate, dibutyl tin dilaurate, along with other metal catalysts beased on Iron and Bismuth, for example, as well as amine catalysts, such as DABCO TEDA. The catalyst is preferably provided in the reaction mixture in an amount of 0.05 to 1 wt.%, more preferably about 0.3 wt.% based on the IPDI.

Despite the purported negative effects of distillation (and in certain embodiments, catalysis), the invention can provide prepolymer compositions preferably comprising at least 70 wt.% of the 2:1 adduct of IPDI and PPG, more preferably at least 85 wt.% of the adduct.

In addition, in certain embodiments substantially all OH groups of the PPG are fully reacted with the IPDI. Substantially all OH groups of the PPG are fully reacted if more than 90% of the OH groups of the PPG are fully reacted. In certain embodiments, at least 95% of the OH groups are fully reacted.

The prepolymer of the invention is preferably prepared by a process comprising reacting IPDI with PPG at an NCO:OH ratio of 4:1 to 20:1 to provide a product mixture comprising the adduct, wherein residual IPDI is distilled from the product mixture such that a concentration of residual IPDI in the product mixture is less than 1 %.

The NCO:OH ratio (i.e., the equivalent ratio) of IPDI to PPG in the reaction mixture is 4:1 to 20:1, even more preferably 6:1 to 10:1.

The process of the invention can be conducted without a catalyst with PPG having a molecular weight less than 1500, but a catalyst is preferred with PPG having a molecular weight of 1500 or greater. (All molecular weights referenced herein are in number average unless otherwise indicated).

Although it is preferred to react the IPDI with a composition substantially comprising PPG, it is also possible to conduct the invention using polyol blends if the blend comprises more than 50 wt.% PPG. Polypropylene glycols are desirable components of this invention due to lower cost and desirable performance attributes (such as good moisture cure characteristics), but have not been previously prepared as low oligomer-containing, low free monomer materials.

Prepolymers of the invention are useful to prepare polyurethanes having multiple applications, such as adhesives, elastomers, coatings, and sealants.

### EXAMPLES

The invention will be illustrated in more detail with reference to the following Examples, but it should be understood that the present invention is not deemed to be limited thereto.

Example 1

This example shows reaction at 10:1 NCO:OH ratio, followed by distillation resulting in a IPDI-terminated prepolymer with low oligomer content and low residual IPDI monomer content.

IPDI (2759 grams; 12.4 moles) was placed in a reactor and heated to 80°C. PPG polyol (MW 725; ARCOL, from Bayer; 952 grams; 1.24 moles) was added over the course of 4 hours while maintaining the reaction temperature at 83°C. Upon completion of the addition, the reaction was maintained at 83°C for an additional 22 hours. The reaction mixture was then subjected to evaporation at reduced pressure using a wiped film evaporator (Pope Scientific). The vacuum was maintained at 1 mm Hg and the jacket temperature of the still was maintained at 150°C. 1425 grams of a clear, colorless product were recovered. Further analysis showed this product to be greater than 85% 2:1 adduct, NCO content 6.51%, viscosity 3781 cps at 40° C and 392 cps at 70° C and residual IPDI of 0.11 %. ¹³C NMR analysis showed all ―OH groups to be fully reacted.

Example 2 (Comparative) Conventional Preparation PPG 725/IPDI at 2:1 NCO:OH.

This example shows a low NCO:OH ratio without catalyst and without distillation results in a commercially unsatisfactory product with a high level of unreacted polyol end groups and a high residual IPDI monomer content.

IPDI (741 grams; 3.33 moles) was placed in a reactor and heated to 80°C. PPG polyol (MW 725; ARCOL from Lyondell; 1260 grams; 1.66 moles) was added over the course of 7 hours while maintaining the reaction temperature at 80°C. Upon completion of the addition, the reaction was maintained at 80°C for an additional 21 hours. The reaction mixture was not subject to further treatment. The clear, colorless product, 1981 grams worth, was subject to analysis which showed less than 85% 2:1 adduct, NCO content of 7.72%, viscosity 1380 cps at 40°C and 207 cps at 70°C and residual IPDI 9.06%. ¹³C NMR analysis also showed a significant amount of unreacted ―OH groups. Oligomer content calculation showed »100% oligomer content, consistent with the analysis of incomplete reaction.

Example 3. PPG 4200/IPDI prepolymer preparation at 10:1 NCO:OH.

This example shows at higher MW of PPG polyol, a high level of unreacted polyol end groups remain (uncatalyzed), even at high NCO/OH ratio. This was previously described in the literature as thermal degradation of the IPDI-PPG prepolymer.

IPDI (259.3 grams; 2.33 equivalents) was placed in a reactor and heated to 80°C. PPG polyol (MW 4200; Acclaim 4200; OH# 29.11; 448.75 grams; 0.23 equivalents) was added over the course of 1.25 hours while maintaining the reaction temperature at 80°C. Upon completion of the addition, the reaction was maintained at 80°C for an additional 16.5 hours. The reaction mixture was then subjected to evaporation at reduced pressure using a wiped film evaporator (Pope Scientific). The vacuum was maintained at 1.0 mm Hg and the jacket temperature of the still was maintained at 180°C. 445 grams of a clear, colorless product were recovered. The percent NCO was found to be 0.80% versus an expected value of 1.80%, viscosity 2188 cps at 40° C and 598 cps at 70° C, and residual IPDI 0%, indicating a combination of incomplete reaction/oligomerization of the product had occurred. Oligomer content calculation of 118% was consistent with incomplete reaction.

Example 4. Higher MW IPDI-PPG prepolymer without catalyst PPG 4200-PPG-6300/IPDI prepolymer preparation at 10:1 NCO:OH

IPDI (999 grams; 4.5 moles) was placed in a reactor and heated to 80°C. PPG polyol (MW 4200; Acclaim 4200; from Bayer; 1268 grams; 0.33 moles) and PPG polyol (MW 6300; Acclaim 6300; from Bayer; 493 grams; 0.08 moles) were added over the course of 3 hours 30 minutes while maintaining the reaction temperature at 79°C. Upon completion of the addition, the reaction was maintained at 82°C for an additional 19 hours. The reaction mixture was then subjected to evaporation at reduced pressure using a wiped film evaporator (Pope Scientific). The vacuum was maintained at 1 mm Hg and the jacket temperature of the still was maintained at 180°C. 1809 grams of a clear, colorless product were recovered. Further analysis showed NCO content 1.50%, vs 1.80% theory; viscosity 1399 cps at 40° C and 353 cps at 70° C; and residual IPDI of 0.05%. Calculated oligomer content of about 44% indicates significant oligomer content and/or incomplete reaction.

Example 4 (Comparative). Preparation and distillation of a higher MW IPDI-PPG prepolymer using a catalyst.

This example shows a catalyst can be used together with a post-reaction distillation without resulting in thermal degradation of the prepolymer.

IPDI (257.7 grams; 2.33 equivalents) was placed in a reactor and heated to 40°C. PPG polyol blend consisting of 327.6 grams, 0.17 equivalents MW 4200 (Acclaim 4200 OH#29.11, f=2), and 127.4 grams, 0.06 equivalents MW 6300 (Acclaim 6300, OH # 27.515, f=3) was prepared and 0.35 grams dibutyl tin dilaurate catalyst (T-12) was mixed into the polyol blend. This mixture was added to the IPDI over the course of 50 minutes. The reaction temperature rose to a maximum of 65°C during the addition. Upon completion of the addition, the reaction was maintained at 60°C for an additional 15.5 hours. The reaction mixture was then subjected to evaporation at reduced pressure using a wiped film evaporator (Pope Scientific). The vacuum was maintained at 1.0 mm Hg and the jacket temperature of the still was maintained at 180°C. 477 grams of a clear, colorless product were recovered. The percent NCO was found to be 1.74% versus an expected value of 1.80% indicating complete reaction with minimal oligomerization had occurred. Calculated oligomer content of about 15% was consistent with this conclusion.

Example 5. Preparation and Distillation of a PPG-1000/IPDI prepolymer without a catalyst NCO:OH 6:1. (Compare to Lomolder et al., supra.)

IPDI (1808.2 grams, 16.3 equivalents) was placed in a reactor and heated to 80°C. PPG polyol, consisting of 1396.9 grams, 2.7 equivalents MW 1000 (Arco 1000 OH#108.9, f=2), was added to the IPDI over the course several hours. The reaction temperature was maintained at 80°C during the addition. Upon completion of the addition, the reaction was maintained at 80°C overnight. The reaction mixture was then subjected to evaporation at reduced pressure using a wiped film evaporator (Pope Scientific). The vacuum was maintained at 1.0 mm Hg and the jacket temperature of the still was maintained at 150°C. 1842 grams of a clear, colorless product were recovered with 0.09% residual IPDI. The percent NCO was found to be 4.87% versus an expected value of 5.69%, indicating some oligomerization had occurred. Calculated oligomer content of about 31% was consistent with this conclusion. Viscosity of the product was determined to be 2097cps at 40°C and 295 cps at 70°C.

Example 6. Preparation and Distillation of a PPG-1000/IPDI prepolymer without a catalyst NCO:OH 4:1. (Compare to Lomolder et al., supra.)

IPDI (1204.8 grams, 10.85 equivalents) was placed in a reactor and heated to 80°C. PPG polyol, consisting of 1397.3 grams, 2.7 equivalents MW 1000 (Arco 1000 OH#108.9, f=2), was added to the IPDI over the course of approximately 1.5 hours. The reaction temperature was maintained at 80°C during the addition. Upon completion of the addition, the reaction was maintained at 80°C overnight. The reaction mixture was then subjected to evaporation at reduced pressure using a wiped film evaporator (Pope Scientific). The vacuum was maintained at 1.0 mm Hg and the jacket temperature of the still was maintained at 150°C. 1787 grams of a clear, colorless product were recovered with 0.08% residual IPDI. The percent NCO was found to be 4.38% versus an expected value of 5.69%, indicating some oligomerization/incomplete reaction had occurred. Calculated oligomer content of about 50% was consistent with this conclusion. Viscosity of the product was determined to be 2080 cps at 40°C and 300 cps at 70°C.

While the invention has been described in detail and with reference to specific examples thereof, it will be apparent to one skilled in the art that various changes and modifications can be made therein without departing from the spirit and scope thereof.

## Claims

1. A prepolymer composition comprising at least 70 wt.% of a 2:1 adduct of isophorone diisocyanate (IPDI) and polypropylene glycol (PPG), and comprising less than 1 wt.% residual IPDI.

2. The prepolymer composition of claim 1, prepared by a process comprising reacting IPDI with polypropylene glycol at an NCO:OH ratio of 4:1 to 20:1 to provide a product mixture comprising the adduct, wherein residual IPDI is distilled from the product mixture such that a concentration of residual IPDI in the product mixture is less than 1%.

3. The prepolymer composition of claim 1, comprising at least 85 wt.% of the adduct.

4. The prepolymer composition of claim 1, wherein the PPG has a molecular weight less than 1500.

5. The prepolymer composition of claim 1, wherein the PPG has a molecular weight greater than 1500.

6. The prepolymer composition of claim 1, comprising less than 0.5 wt.% residual IPDI.

7. The prepolymer composition of claim 1, wherein substantially all OH groups of the PPG are fully reacted with the IPDI.

8. A process for preparing the prepolymer composition of claim 1, said process comprising reacting IPDI with PPG at an NCO:OH ratio of 4:1 to 20:1 to provide a product mixture comprising the 2:1 adduct, wherein residual IPDI is distilled from the product mixture such that a concentration of residual IPDI in the product mixture is less than 1%.

9. The process of claim 8, wherein the IPDI is reacted with PPG at an NCO:OH ratio of 6:1 to 10:1.

10. The process of claim 8, wherein the PPG has a molecular weight less than 1500, and the process is conducted without a catalyst.

11. The process of claim 8, wherein the PPG has a molecular weight greater than 1500 and the process is conducted with a catalyst.

12. The process of claim 8, wherein the PPG is provided as a major component of a blend with other polyols.

13. The process of claim 8, wherein the residual IPDI is distilled at a temperature greater than 100°C, and the process is conducted with a catalyst.

14. The process of claim 8, wherein the 2:1 adduct comprises at least 85 wt.% of the product mixture.

15. The process of claim 8, comprising less than 0.5 wt.% residual IPDI.

16. The process of claim 8, wherein substantially all OH groups of the PPG are fully reacted with the IPDI.

## Patentansprüche

1. Prepolymerzusammensetzung, umfassend mindestens 70 Gew.-% eines 2 : 1-Addukts von Isophorondiisocyanat (IPDI) und Polypropylenglycol (PPG) sowie umfassend weniger als 1 Gew.-% rückständiges IPDI.

2. Prepolymerzusammensetzung nach Anspruch 1, hergestellt durch ein Verfahren, umfassend das Umsetzen von IPDI mit Polypropylenglycol bei einem NCO : OH-Verhältnis von 4 : 1 bis 20 : 1, um ein das Addukt umfassendes Produktgemisch bereitzustellen, wobei rückständiges IPDI so aus dem Produktgemisch abdestilliert wird, dass eine Konzentration an rückständigem IPDI im Produktgemisch weniger als 1 % beträgt.

3. Prepolymerzusammensetzung nach Anspruch 1, umfassend mindestens 85 Gew.-% des Addukts.

4. Prepolymerzusammensetzung nach Anspruch 1, bei der das PPG ein Molekulargewicht von weniger als 1.500 hat.

5. Prepolymerzusammensetzung nach Anspruch 1, bei der das PPG ein Molekulargewicht von mehr als 1.500 hat.

6. Prepolymerzusammensetzung nach Anspruch 1, umfassend weniger als 0,5 Gew.-% rückständiges IPDI.

7. Prepolymerzusammensetzung nach Anspruch 1, in der im Wesentlichen alle OH-Gruppen des PPG vollständig mit dem IPDI umgesetzt werden.

8. Verfahren zur Herstellung der Prepolymerzusammensetzung nach Anspruch 1, das Verfahren umfassend die Umsetzung von IPDI mit PPG bei einem NCO : OH-Verhältnis von 4 : 1 bis 20 : 1, um ein das 2 : 1-Addukt umfassendes Produktgemisch bereitzustellen, wobei rückständiges IPDI so aus dem Produktgemisch abdestilliert wird, dass eine Konzentration an rückständigem IPDI im Produktgemisch weniger als 1 % beträgt.

9. Verfahren nach Anspruch 8, bei dem das IPDI bei einem NCO : OH-Verhältnis von 6 : 1 bis 10 : 1 mit PPG umgesetzt wird.

10. Verfahren nach Anspruch 8, bei dem das PPG ein Molekulargewicht von weniger als 1.500 hat und das Verfahren ohne Katalysator durchgeführt wird.

11. Verfahren nach Anspruch 8, bei dem das PPG ein Molekulargewicht von mehr als 1.500 hat und das Verfahren mit einem Katalysator durchgeführt wird.

12. Verfahren nach Anspruch 8, bei dem das PPG als größere Komponente einer Mischung mit anderen Polyolen bereitgestellt wird.

13. Verfahren nach Anspruch 8, bei dem das rückständige IPDI bei einer Temperatur von mehr als 100°C destilliert wird und das Verfahren mit einem Katalysator durchgeführt wird.

14. Verfahren nach Anspruch 8, bei dem das 2 : 1-Addukt mindestens 85 Gew.-% des Produktgemischs ausmacht.

15. Verfahren nach Anspruch 8, umfassend weniger als 0,5 Gew.-% rückständiges IPDI.

16. Verfahren nach Anspruch 8, bei dem im Wesentlichen alle OH-Gruppen des PPG vollständig mit dem IPDI umgesetzt werden.

## Revendications

1. Composition de pré-polymère comprenant au moins 70 % en poids d'un produit d'addition à 2/1 de diisocyanate d'isophorone (isophorone diisocyanate IPDI) et de polypropylène glycol (PPG) et comprenant moins de 1 % en poids d'IPDI résiduel.

2. Composition de pré-polymère selon la revendication 1, préparée par un procédé comprenant la mise en réaction de l'IPDI avec du polypropylène glycol dans un rapport NCO/OH de 4/1 à 20/1 afin de donner un mélange de produits comprenant le produit d'addition, l'IPDI résiduel étant séparé par distillation du mélange de produits de sorte que la concentration en IPDI résiduel dans le mélange de produits soit inférieure à 1 %.

3. Composition de pré-polymère selon la revendication 1, comprenant au moins 85 % en poids du produit d'addition.

4. Composition de pré-polymère selon la revendication 1, dans laquelle le PPG a un poids moléculaire inférieur à 1500.

5. Composition de pré-polymère selon la revendication 1, dans laquelle le PPG a un poids moléculaire supérieur à 1500.

6. Composition de pré-polymère selon la revendication 1, comprenant moins de 0,5 % en poids d'IPDI résiduel.

7. Composition de pré-polymère selon la revendication 1, dans laquelle pratiquement tous les groupes OH du PPG ont entièrement réagi avec l'IPDI.

8. Procédé de préparation de la composition de pré-polymère selon la revendication 1, ledit procédé comprenant la mise en réaction de l'IPDI avec du PPG dans un rapport NCO/OH de 4/1 à 20/1 afin de donner un mélange de produits comprenant le produit d'addition à 2/1, l'IPDI résiduel étant séparé par distillation du mélange de produits de sorte que la concentration en IPDI résiduel dans le mélange de produits soit inférieure à 1 %.

9. Procédé selon la revendication 8, dans lequel on fait réagir l'IPDI avec du PPG dans un rapport NCO/OH de 6/1 à 10/1.

10. Procédé selon la revendication 8, dans lequel le PPG a un poids moléculaire inférieur à 1500 et le procédé est conduit sans catalyseur.

11. Procédé selon la revendication 8, dans lequel le PPG a un poids moléculaire supérieur à 1500 et le procédé est conduit avec un catalyseur.

12. Procédé selon la revendication 8, dans lequel le PPG est apporté en tant que composant majeur d'un mélange avec d'autres polyols.

13. Procédé selon la revendication 8, dans lequel l'IPDI résiduel est distillé à une température supérieure à 100 °C et le procédé est conduit avec un catalyseur.

14. Procédé selon la revendication 8, dans lequel le produit d'addition à 2/1 comprend au moins 85 % en poids du mélange de produits.

15. Procédé selon la revendication 8, comprenant moins de 0,5 % en poids d'IPDI résiduel.

16. Procédé selon la revendication 8, dans lequel pratiquement tous les groupes OH du PPG ont entièrement réagi avec l'IPDI.
